# EUROPEAN PATENT SPECIFICATION

(11) **EP 4 317 593 B1**
(45) Date of publication and mention of the grant of the patent: **24.12.2025**
(21) Application number: 22925670.6
(22) Date of filing: 26.10.2022
(51) Int. Cl.: E02D 31/06, E02D 27/42, E02D 27/52

(54) **SELF-MAINTAINING AND ANTI-SCOURING DEVICE FOR OFFSHORE WIND POWER PILE FOUNDATION**
SELBSTERHALTENDE UND SCHEUERHEMMENDE VORRICHTUNG FÜR OFFSHORE-WINDENERGIEPFAHLFUNDAMENT
DISPOSITIF DE MAINTIEN AUTONOME ET ANTI-SCOURRAGE POUR FONDATION DE PIEUX D'ÉNERGIE ÉOLIENNE EN MER

(30) Priority: 11.02.2022 CN 202210128323
(43) Date of publication of application: 07.02.2024
(73) Proprietor: SHANGHAI INVESTIGATION, DESIGN & RESEARCH INSTITUTE CO., LTD., Shanghai 200434 (CN); China Three Gorges Corporation, Wuhan, Hubei 430010 (CN)
(72) Inventor: ZHANG, Xu, Shanghai 200434 (CN); ZHOU, Shaowu, Shanghai 200434 (CN); LIN, Yifeng, Shanghai 200434 (CN); JIANG, Juan, Shanghai 200434 (CN)
(74) Representative: Canzler & Bergmeier Patentanwälte Partnerschaft mbB
(86) International application number: PCT/CN2022/127519
(87) International publication number: WO 2023/151318

(56) References cited:
- CN-A- 102 493 478
- CN-A- 110 965 569
- CN-A- 111 664 060
- CN-A- 113 186 986
- CN-A- 113 186 986
- CN-A- 113 684 858
- CN-A- 113 684 858
- CN-A- 113 737 841
- DE-A1- 102011 102 546

## Description

### FIELD OF TECHNOLOGY

The present disclosure relates to the technical field of pile foundation scour prevention, in particular, to a self-maintaining and anti-scouring device for an offshore wind power pile foundation, such as generally known from CN 113 684 858.

### BACKGROUND

Wind power generation is the fastest-growing green energy technology in the world. While land-based wind power farms are developing rapidly, people have already noticed some limitations of land-based wind energy utilization, such as large land occupation, noise pollution, and other issues. Due to the abundant wind energy resources at sea and the feasibility of offshore wind power technology, the ocean will become a rapidly developing wind power market. Offshore wind power farms in Europe and America are on the eve of large-scale development. The sea area within 50 meters deep along the eastern coast of China is vast and close to the power load center. With the development and maturity of offshore wind power farm technology, wind energy will become an important energy source of sustainable development for China's eastern coastal areas.

The offshore wind power pile foundation is a structure for supporting wind power equipment. When offshore wind power generators bear the scouring and impact of seawater, silt around their pile foundations will be scoured by seawater, resulting in the formation of scour holes. These holes will affect the stability of the wind power pile foundations and cause them to tilt or collapse. In existing technologies, the most common method for preventing the wind power equipment from tilting and collapsing is to reinforce the silt around their pile foundations. However, this method is difficult to implement and requires regular underwater maintenance.

D1 discloses an offshore wind power foundation with sand guiding function, which includes a pile foundation, a sinking prevention plate, and a sand guiding component. The cross-sectional outer contour of the pile foundation is circular, and the pile foundation is at least partially embedded in the seabed, which has a seabed surface. The sinking prevention plate is fitted over the pile foundation, and the lower surface of the sinking prevention plate is suitable for fitting against the seabed surface. The sand guiding component includes a sand guiding pipe and a driving device. The sand guiding pipe is located on the upper surface of the sinking prevention plate and is used to guide the sediment from the outer peripheral side of the sinking prevention plate to the pile foundation. The driving device is connected to the sand guiding pipe and is used to drive the sand guiding pipe to guide the sand. The offshore wind power foundation with sand guiding function has the characteristics of simple structure, safety and reliability, and good anti-erosion effect.

### SUMMARY

In view of this, the present disclosure provides a self-maintaining and anti-scouring device for offshore wind power pile foundation to solve the above-mentioned defects in the prior art.

A self-maintaining and anti-scouring device for an offshore wind power pile foundation, comprising: a plurality of fixing parts configured to be fixedly disposed on seabed; an installation part disposed above the plurality of fixing parts and configured for installing wind power equipment; and a sand-screening part, comprising a sand-screening ring and an impeller both of which are disposed below the installation part, wherein a seawater inlet, a stirring chamber and a sand outlet are disposed on the sand-screening ring in sequence from a top to a bottom of the sand-screening ring, and a seawater outlet is disposed on a side surface of the sand-screening ring to communicate to the stirring chamber, wherein the impeller is horizontally and rotatably disposed in the stirring chamber to separate sand and seawater in the stirring chamber through a centrifugal force, wherein the sand and the seawater are respectively discharged through the sand outlet and the seawater outlet, at which time sand-containing seawater enters the stirring chamber through the seawater inlet.

Preferably, the self-maintaining and anti-scouring device further comprises a plurality of sand-pressing parts and a lifting part, wherein each of the plurality of fixing parts is sleeved with one of the plurality of sand-pressing parts, wherein the lifting part is disposed below the installation part for driving the plurality of sand-pressing parts to ascend and descend.

Preferably, the lifting part comprises a hydraulic cylinder, a connecting plate, and a plurality of connecting rods, wherein a top of the hydraulic cylinder is fixedly connected to the installation part, a bottom of the hydraulic cylinder is fixedly connected to the connecting plate, and the connecting plate is fixedly connected to the plurality of sand-pressing parts through the plurality of connecting rods.

Preferably, the sand-screening part further comprises a waterproof motor and an installation seat, wherein the installation seat is fixedly disposed above the sand-screening ring through a plurality of supporting rods, wherein the installation seat is disposed below the connecting plate, and the waterproof motor is fixedly installed on the installation seat.

Preferably, the sand-screening ring is fixedly connected to the plurality of sand-pressing parts, and a bottom surface of the sand-screening ring is flush with those of the plurality of sand-pressing parts.

Preferably, a gap is formed between the impeller and the sand-screening ring, wherein a sand-blocking net is disposed in the gap along an axial direction of the sand-screening ring, and the sand-blocking net is disposed upstream of the seawater outlet.

Preferably, the seawater outlet is a strip-shaped slot disposed along a circumferential direction of the sand-screening ring.

Preferably, the number of the plurality of fixing parts is two or three, and each of the plurality of fixing parts is provided with a base for abutting against the seabed.

Preferably, each of the plurality of fixing parts comprises a stand column and a pre-embedded column, which are disposed and connected to each other along their common axial direction, wherein a bottom of the pre-embedded column is embedded into the seabed, and a top of the stand column is fixedly connected to the installation part.

Preferably, the installation part comprises an installation base, and the installation base, the stand column and the pre-embedded column are integrally formed.

The present disclosure has the following advantages:
1. The present disclosure adopts the method of adding sand to reinforce the wind power pile foundation. The sand-screening ring and the impeller are both disposed below the installation part. When the impeller rotates horizontally in the sand-screening ring, the sand-containing seawater in the stirring chamber of the sand-screening ring is carried along with the impeller and is separated into sand and seawater through the centrifugal force. The seawater can be discharged through the seawater outlet disposed on the side surface of the sand-screening ring under the action of the centrifugal force, while the sand gradually gathers on the inner surface of the sand-screening ring under the action of the centrifugal force, and falls onto the fixing parts through the sand outlet disposed at the bottom of the sand-screening ring under the action of the inner surface of the sand-screening ring. Thus, the wind power pile foundation is reinforced, and the detachment of the base layer around the fixing parts and the occurrence of the scour holes, both caused by the scouring and impact of seawater, are avoided. Thereby, the purpose of scour prevention can be achieved.
2. The present disclosure adopts the method of pressing the gathered sand around the wind power pile foundation to reinforce it. The lifting part is disposed below the installation part, and each of the fixing parts is sleeved with one sand-pressing part connected with the lifting part. When the sand separated from the sand-screening part falls to the periphery of the fixing parts of the wind power pile foundation, the lifting part can drive the sand-pressing parts to ascend and descend relative to the fixing parts, thus reinforcing the sand. Reinforcement of the wind power pile foundation can be achieved by the above method, and the base layer around the fixing parts can always be kept flat and dense, thereby avoiding workers' underwater work and reducing maintenance costs.
3. In the present disclosure, a strip-shaped seawater outlet is disposed along the circumferential direction of the sand-screening ring. After discharging the seawater in the sand-screening ring through the seawater outlet under the action of the centrifugal force, not only can the seawater's impact on the wind power pile foundation be offset, but also the seawater around the wind power pile foundation can be stirred and introduced into the stirring chamber, through the seawater inlet disposed at the top of the sand-screening ring, to realize the circulation flow of seawater inside and outside the stirring chamber, thus introducing the sand into the stirring chamber.
4. In the present disclosure, the sand-blocking net is disposed upstream of the seawater outlet. During the seawater stirring process, this sand-blocking net can block the sand in seawater from entering the seawater outlet, and make the sand gather and fall to the bottom of the wind power pile foundation, thereby reinforcing the wind power pile foundation.
5. The present disclosure adopts three fixing parts to support the installation part. The stability of the entire device can be improved by using the stability principle of a triangle together with an integral design of the fixing parts and the installation part.

### BRIEF DESCRIPTION OF THE DRAWINGS

FIG. 1 is a perspective view of a self-maintaining and anti-scouring device for an offshore wind power pile foundation according to the present disclosure;
FIG. 2 is a front view of a self-maintaining and anti-scouring device for an offshore wind power pile foundation according to the present disclosure;
FIG. 3 is a schematic view illustrating a connection between a sand-screening part and sand-pressing parts;
FIG. 4 is a top view illustrating a positional relationship between a sand-screening ring and an impeller;
FIG. 5 is a schematic structural view of a sand-screening ring.

### Reference numerals

- 10: Fixing part
- 11: Stand column
- 12: Pre-embedded column
- 13: Base
- 20: Installation part
- 30: Sand-screening part
- 31: Sand-screening ring
- 32: Impeller
- 33: Waterproof motor
- 34: Installation seat
- 35: Sand-blocking net
- 36: Supporting rod
- 311: Seawater inlet
- 312: Stirring chamber
- 313: Sand outlet
- 314: Seawater outlet
- 40: Sand-pressing part
- 50: Lifting part
- 51: Hydraulic cylinder
- 52: Connecting plate
- 53: Connecting rod

### DETAILED DESCRIPTION

In the following, embodiments of the present disclosure will be described in further detail with reference to the accompanying drawings. The embodiments are exemplary and are not to be construed as restricting the present disclosure.

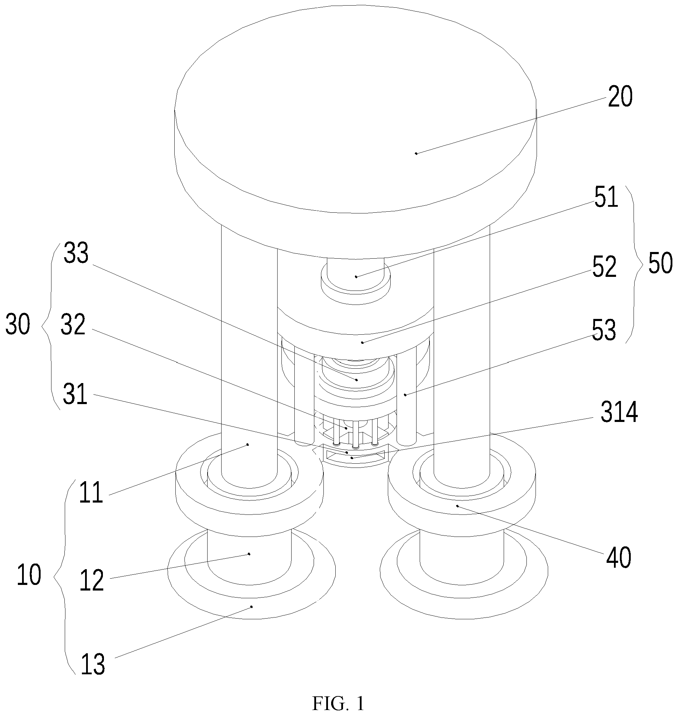

As shown in FIGs. 1 to 5, a self-maintaining and anti-scouring device for an offshore wind power pile foundation is provided to reinforce a sand-base layer around the wind power pile foundation, preventing wind power equipment from tilting and collapsing. The self-maintaining and anti-scouring device comprises:
multiple fixing parts (10) configured to be fixedly disposed on seabed;
an installation part (20) disposed at a top of the fixing parts (10) and used for installing wind power equipment;
a sand-screening part (30), comprising a sand-screening ring (31) and an impeller (32) both of which are disposed below the installation part (20); the sand-screening ring (31) is substantially cylindrical, a top of the sand-screening ring (31) is configured as a seawater inlet (311), a bottom of the sand-screening ring (31) is configured as a sand outlet (313), a cavity of the sand-screening ring (31) is configured as a stirring chamber (312) for solid-liquid separation, and a seawater outlet (314) is disposed on a side surface of the sand-screening ring (31) to communicate to the stirring chamber (312); the impeller (32) is coaxially and horizontally rotatably disposed in the stirring chamber (312), and when the impeller (32) intermittently rotates within the stirring chamber (312), sand and seawater in the stirring chamber (312) can be separated through a centrifugal force, and the sand and the seawater are respectively discharged through the sand outlet (313) and the seawater outlet (314), at which time sand-containing seawater enters the stirring chamber (312) through the seawater inlet (311) of the sand-screening ring (31), thus realizing a circulation flow of seawater inside and outside the stirring chamber 312.

The present disclosure adopts the method of adding sand to reinforce the wind power pile foundation. The sand-screening ring 31 and the impeller 32 are both disposed below the installation part 20. When the impeller 32 rotates horizontally in the sand-screening ring 31, the sand-containing seawater in the stirring chamber 312 of the sand-screening ring 31 is carried along with the impeller 32, and is separated into the sand and seawater through the centrifugal force. The seawater can be discharged through the seawater outlet 314 disposed on the side surface of the sand-screening ring 31 under the action of the centrifugal force, while the sand gradually gathers on an inner surface of the sand-screening ring 31 under the action of the centrifugal force, and falls onto the fixing parts 10 through the sand outlet 313 disposed at the bottom of the sand-screening ring 31 under the action of the inner surface of the sand-screening ring 31. Thus, the wind power pile foundation is reinforced, and the detachment of the sand-base layer around the fixing parts 10 and the occurrence of scour holes, both caused by the scouring and impact of seawater, are avoided. Thus, the purpose of scour prevention can be achieved.

In an embodiment, as shown in FIGs. 1 to 3, the self-maintaining and anti-scouring device further comprises multiple sand-pressing parts 40 and a lifting part 50. Each of the fixing parts 10 is sleeved with one movable sand-pressing part 40. The lifting part 50 is disposed below the installation part 20 for driving the sand-pressing parts 40 to ascend and descend. In this way, when the sand separated from the sand-screening part 30 falls to the periphery of the fixing parts 10 of the wind power pile foundation, the lifting part 50 can drive the sand-pressing parts 40 to ascend and descend relative to the fixing parts 10, thus reinforcing the sand around the fixing parts 10, and the sand-base layer around the fixing parts 10 can always be kept flat and dense. The self-repair of the sand-base layer for the wind power pile foundation can be achieved by the above method, thereby avoiding workers' underwater work and reducing maintenance costs.

Preferably, each of the sand-pressing parts 40 comprises a sand-pressing ring, and an inner hole of the sand-pressing ring is sleeved on the corresponding fixing part 10, so that the sand-pressing ring can ascend and descend along an axial direction of the fixing part 10.

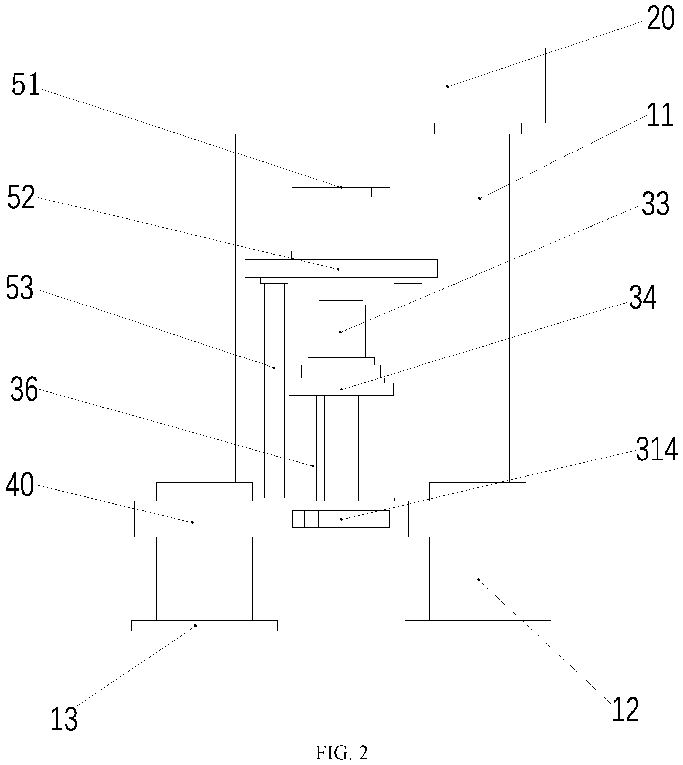

More preferably, the lifting part 50 can be any mechanical structure that has a lifting function. An example of such a structure will be described in detail below. As shown in FIGs. 1 and 2, the lifting part 50 comprises a hydraulic cylinder 51, a connecting plate 52, and multiple connecting rods 53, and the installation part 20 comprises an installation base with a disk-shaped design. A cylinder terminal of the hydraulic cylinder 51 is located at a top of the hydraulic cylinder 51, and is coaxially and fixedly connected to the installation base. A piston terminal of the hydraulic cylinder 51 is located at a bottom of the hydraulic cylinder 51, and is coaxially and fixedly connected to the connecting plate 52. Multiple connecting rods 53 are circumferentially and evenly distributed around the axis of the connecting plate 52. A top of each connecting rod 53 is fixedly connected to the connecting plate 52, and a bottom of each connecting rod 53 is fixedly connected to the corresponding sand-pressing part 40. In this way, the sand-pressing parts 40 can be driven to ascend and descend relative to the fixing parts 10 by utilizing the expansion and contraction of the hydraulic cylinder 51, thus reinforcing the sand around the fixing parts 10.

It should be noted that, during the expansion and contraction of the hydraulic cylinder 51, the hydraulic cylinder 51 must always be located above the sea surface. This design can not only prevent the hydraulic cylinder 51 from being submerged in seawater, which results in poor driving force, but also protects the hydraulic cylinder 51 from seawater erosion, thereby extending the service life of the entire device.

In an embodiment, as shown in FIGs. 1 and 2, the sand-screening part 30 further comprises a waterproof motor 33 and an installation seat 34. The installation seat 34 is disposed between the sand-screening ring 31 and the connecting plate 52, and is fixedly disposed above the sand-screening ring 31 through multiple supporting rods 36. The waterproof motor 33 is fixedly installed on the installation seat 34, and a power output shaft of the waterproof motor 33 penetrates the installation seat 34, and is transmitted to the impeller 32 disposed within the stirring chamber 312. In this way, the waterproof motor 33 is fixedly disposed above the sand-screening ring 31 by utilizing the installation seat 34 and multiple supporting rods 36, and the power output shaft of the waterproof motor 33 drives the impeller 32 to rotate, thereby separating the sand-containing seawater in the stirring chamber 312 into the sand and seawater, and realizing a circulation flow of seawater inside and outside the stirring chamber 312. Therefore, the sand-containing seawater around the wind power pile foundation can be introduced into the stirring chamber 312 through the seawater inlet disposed at the top of the sand-screening ring 31, then the seawater is discharged through the seawater outlet 314 disposed on the side surface of the sand-screening ring 31, and the sand gathering in the stirring chamber 312 falls down.

Preferably, the waterproof motor 33 has a waterproof shell. The waterproof shell can prevent the seawater from entering and damaging the waterproof motor 33, which soaks in seawater for a long time, thereby playing a role in waterproof isolation.

More preferably, a surface of the impeller 32 is coated with an anti-rust and anti-corrosion coating. In this way, by coating anti-rust and anti-corrosion coatings on the surface of the impeller 32, the overall service life of the impeller 32 is improved, and maintenance time and frequency are reduced, thereby achieving the purpose of easy maintenance.

In an embodiment, as shown in FIGs. 1 to 4, multiple sand-pressing parts 40 are disposed around the sand-screening ring 31. The side surface of the sand-screening ring 31 is fixedly connected to a side surface of each sand-pressing part 40, and a bottom surface of the sand-screening ring 31 is flush with those of the sand-pressing parts 40. In this way, the sand around the fixing parts 10 can be reinforced by utilizing the sand-pressing parts 40 and the sand-screening ring 31, so that the sand-base layer around the fixing parts 10 can be kept flat, thereby achieving the purpose of facilitating reinforcement.

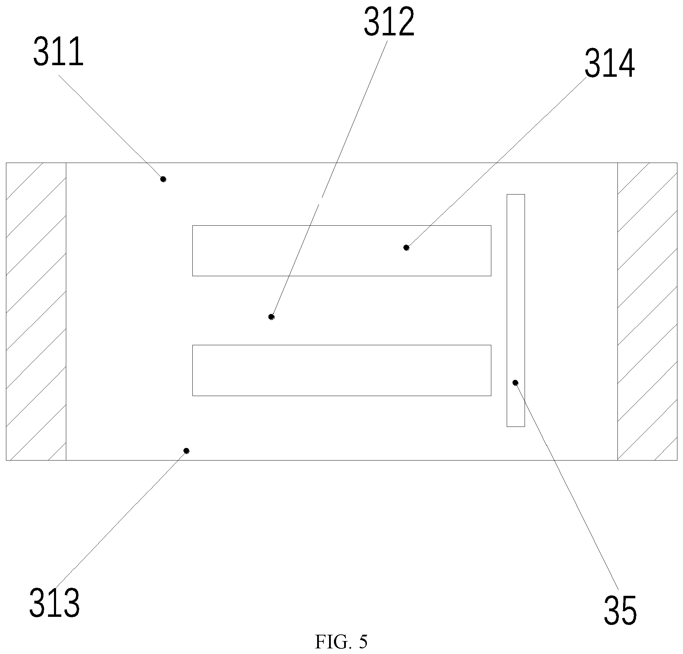

In an embodiment, as shown in FIG. 5, a radial dimension of the impeller 32 is smaller than an inner diameter of the sand-screening ring 31, so that a gap is formed between the impeller 32 and the sand-screening ring 31. A sand-blocking net 35 is disposed in the gap along an axial direction of the sand-screening ring 31, and has a one-to-one correspondence with the seawater outlet 314. The sand-blocking net 35 is disposed upstream of the seawater outlet 314. In this way, after separating the sand-containing seawater into the sand and seawater through the centrifugal force, the seawater bears a small centrifugal force and is discharged through the seawater outlet 314 without being affected by the sand-blocking net 35, and the sand bears a large centrifugal force and is gathered to the gap and the inner surface of the sand-screening ring 31. With the flow of seawater, part of the sand in the gap will be discharged through the seawater outlet 314 along with the seawater, rendering this part of the sand unusable. By disposing the sand-blocking net 35 upstream of the seawater outlet 314, the sand carried by seawater in the gap is intercepted, and falls to the periphery of the fixing parts 10 under the action of a gravitational force, maximizing sand utilization.

In an embodiment, as shown in FIGs. 2 to 4, the seawater outlet 314 is a strip-shaped slot disposed along a circumferential direction of the sand-screening ring 31. In this way, the seawater outlet 314 being a strip-shaped slot facilitates the seawater in the stirring chamber 312 to discharge, and reduces a dimension of the seawater outlet 314 along the axial direction of the sand-screening ring 31, thus preventing the sand from being carried out by seawater. Meanwhile, under the action of the centrifugal force, the seawater discharged through the strip-shaped slot can not only stir the seawater around the wind power pile foundation, but also reduce the impact of waves on the wind power pile foundation.

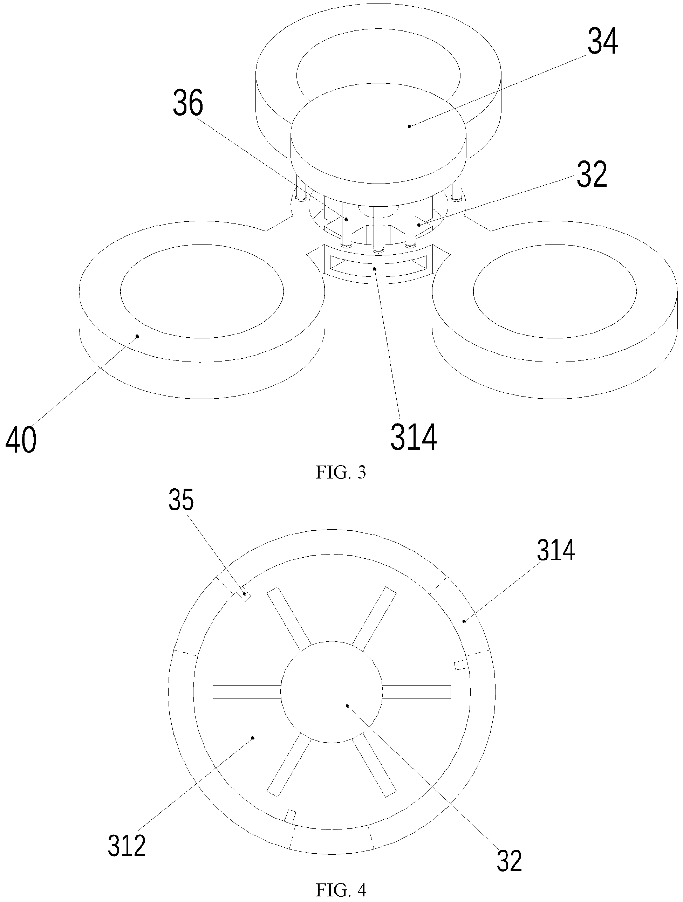

In an embodiment, as shown in FIGs. 1 and 3, multiple fixing parts 10, for example, two or three, are provided, and each fixing part corresponds one-to-one with one of the sand-pressing parts 40. When the number of the fixing parts 10 is three, the fixing parts should be disposed at vertices of an equilateral triangle, and each of the fixing parts 10 is provided with a base 13 for abutting against the seabed. Compared with a single support structure, a more stable support structure is obtained by supporting the installation base with multiple fixing parts 10. When the wind power pile foundation bears the impact of waves, the wind power equipment installed on the installation base will remain stable and not shake, thereby achieving the purpose of stabilizing the structure.

Preferably, each of the fixing parts 10 comprises a stand column 11 and a pre-embedded column 12. A top of the pre-embedded column 12 is coaxially and fixedly connected to the stand column 11, and a bottom of the pre-embedded column 12 is embedded into a pre-embedded hole in the seabed. The base 13 is reinforced in the seabed, and the installation base, the stand column 11 and the pre-embedded column 12 are formed integrally. Compared with fixing and welding the wind power equipment with connecting pieces, a main body with an integral structure can be obtained by reinforcing the pre-embedded column 12 into the pre-embedded hole and integrally forming the installation base, the stand column 11 and the pre-embedded column 12. This structure improves the impact resistance of the wind power equipment.

The application process for the self-maintaining and anti-scouring device of the present disclosure is as follows:

When the device is in use, the hydraulic cylinder 51 and the waterproof motor 33 that are used in conjunction with each other are first installed below the installation base and fixed, respectively, then the stand column 11 and the pre-embedded column 12 of the wind power pile foundation are submerged in seawater, and the pre-embedded column 12 goes deep into the pre-embedded hole in the seabed and is fixed. Finally, the wind power equipment is fixedly installed on the installation base. When the waves scour the stand column 11, the waterproof motor 33 is started, and the power output shaft of the waterproof motor 33 drives the impeller 32 to rotate for stirring the sand-containing seawater in the stirring chamber 312. The sand and the seawater are separated through the centrifugal force, and the seawater will be discharged through the seawater outlet 314 disposed on the side surface of the sand-screening ring 31 and stir the seawater around the wind power pile foundation. With the flow of the seawater, the sand will be carried along with the seawater and enter the stirring chamber 312 through the seawater inlet 311 disposed at the top of the sand-screening ring 31, thereby allowing the remotely located sand to be sucked to the periphery of the wind power pile foundation. The sand-pressing parts 40 are used for reinforcing the sand around the pre-embedded column 12, thus the nearby sand-base layer can always be kept flat, avoiding the occurrence of scour holes caused by the scouring and impact of seawater. Thereby, the purpose of scour prevention can be achieved.

Compared with the existing technology, the present disclosure has the following beneficial technical effects:
1. In the present disclosure, the sand-screening ring 31 and the impeller 32 are both disposed below the installation base. When the impeller 32 rotates in the stirring chamber 312, the sand-containing seawater in the stirring chamber 312 is separated into the sand and the seawater through the centrifugal force. The seawater can be discharged through the seawater outlet 314 disposed on the side surface of the sand-screening ring 31, and the sand around the installation base can be carried along with the seawater to move below the installation base. With the flow of the seawater, the sand around the wind power pile foundation can also be sucked below the installation base. Thus, the detachment of the sand-base layer around the stand column 11 and the pre-embedded column 12 and the occurrence of the scour holes, both caused by the scouring and impact of seawater, are avoided. Thereby, the purpose of scour prevention can be achieved.
2. In the present disclosure, the hydraulic cylinder 51 is disposed below the installation base, and the hydraulic cylinder 51 is connected to the sand-pressing part 40 disposed on the corresponding pre-embedded column 12. When the waterproof motor 33 is running or after it has run, the hydraulic cylinder 51 drives the sand-screening ring 31 and the sand-pressing part 40 to ascend and descend along the axial direction of the fixing part 10. When the sand-screening ring 31 and the sand-pressing part 40 move downward simultaneously, the sand below the installation base can be reinforced at the periphery of the pre-embedded column 12, and the sand-base layer around the pre-embedded column 12 can always be kept flat and dense, thereby achieving the self-repair of the sand-base layer for the wind power pile foundation, avoiding workers' underwater work, and reducing maintenance costs.

## Claims

1. A device for an offshore wind power pile foundation, comprising:
a plurality of fixing parts (10) configured to be fixedly disposed on seabed;
an installation part (20) disposed above the plurality of fixing parts (10) and configured for installing wind power equipment; and
a sand-screening part (30),
**characterized in that** the sand-screening part (30) comprises a sand-screening ring (31) and an impeller (32), both of which are disposed below the installation part (20), wherein a seawater inlet (311), a stirring chamber (312) and a sand outlet (313) are disposed on the sand-screening ring (31) in sequence from a top to a bottom of the sand-screening ring (31), and a seawater outlet (314) is disposed on a side surface of the sand-screening ring (31) to communicate to the stirring chamber (312), wherein the impeller (32) is horizontally and rotatably disposed in the stirring chamber (312) to separate sand and seawater in the stirring chamber (312) through a centrifugal force, wherein the sand and the seawater are discharged through the sand outlet (313) and the seawater outlet (314) respectively, at which time sand-containing seawater enters the stirring chamber (312) through the seawater inlet (311).

2. **The** device for the offshore wind power pile foundation according to claim 1, further comprising: a plurality of sand-pressing parts (40) and a lifting part (50), wherein each of the plurality of fixing parts (10) is sleeved with one of the plurality of sand-pressing parts (40), wherein the lifting part (50) is disposed below the installation part (20) for driving the plurality of sand-pressing parts (40) to ascend and descend; wherein the lifting part (50) comprises a hydraulic cylinder (51), a connecting plate (52), and a plurality of connecting rods (53), wherein a top of the hydraulic cylinder (51) is fixedly connected to the installation part (20), a bottom of the hydraulic cylinder (51) is fixedly connected to the connecting plate (52), and the connecting plate (52) is fixedly connected to the plurality of sand-pressing parts (40) through the plurality of connecting rods (53).

3. The device for the offshore wind power pile foundation according to claim 2, wherein the sand-screening part (30) further comprises a waterproof motor (33) and an installation seat (34), wherein the installation seat (34) is fixedly disposed above the sand-screening ring (31) through a plurality of supporting rods (36), wherein the installation seat (34) is disposed below the connecting plate (52), and the waterproof motor (33) is fixedly installed on the installation seat (34).

4. The device for the offshore wind power pile foundation according to claim 3, wherein the sand-screening ring (31) is fixedly connected to the plurality of sand-pressing parts (40), and a bottom surface of the sand-screening ring (31) is flush with those of the plurality of sand-pressing parts (40).

5. The device for the offshore wind power pile foundation according to any one of claims 1 to 4, wherein a gap is formed between the impeller (32) and the sand-screening ring (31), wherein a sand-blocking net (35) is disposed in the gap along an axial direction of the sand-screening ring (31), and the sand-blocking net (35) is disposed upstream of the seawater outlet (314).

6. The device for the offshore wind power pile foundation according to claim 5, wherein the seawater outlet (314) is a strip-shaped slot disposed along a circumferential direction of the sand-screening ring (31).

7. The device for the offshore wind power pile foundation according to claim 1, wherein the number of the plurality of fixing parts (10) is two or three, and each of the plurality of fixing parts (10) is provided with a base (13) for abutting against the seabed.

8. The device for the offshore wind power pile foundation according to claim 7, wherein each of the plurality of fixing parts (10) comprises a stand column (11) and a pre-embedded column (12), which are disposed and connected to each other along their common axial direction, wherein a bottom of the pre-embedded column (12) is embedded into the seabed, and a top of the stand column (11) is fixedly connected to the installation part (20).

9. The device for the offshore wind power pile foundation according to claim 8, wherein the installation part (20) comprises an installation base, and the installation base, the stand column (11) and the pre-embedded column (12) are integrally formed.

## Patentansprüche

1. Vorrichtung für ein Offshore-Windenergiepfahlfundament, umfassend:
eine Vielzahl von Befestigungsteilen (10), die konfiguriert sind, um fest auf dem Meeresboden angeordnet zu sein;
ein Installationsteil (20), das über der Vielzahl von Befestigungsteilen (10) angeordnet ist und zum Installieren von Windenergie-Ausrüstung konfiguriert ist; und
ein Sandsiebteil (30),
**dadurch gekennzeichnet, dass** das Sandsiebteil (30) einen Sandsiebring (31) und ein Laufrad (32) umfasst, die beide unter dem Installationsteil (20) angeordnet sind, wobei ein Meerwassereinlass (311), eine Rührkammer (312) und ein Sandauslass (313) auf dem Sandsiebring (31) der Reihe nach von einer Oberseite zu einer Unterseite des Sandsiebrings (31) angeordnet sind, und dass ein Meerwasserauslass (314) auf einer Seitenfläche des Sandsiebrings (31) angeordnet ist, um mit der Rührkammer (312) in Verbindung zu stehen, wobei das Laufrad (32) horizontal und drehbar in der Rührkammer (312) angeordnet ist, um Sand und Meerwasser in der Rührkammer (312) durch eine Zentrifugalkraft zu trennen, wobei der Sand und das Meerwasser durch den Sandauslass (313) bzw. den Meerwasserauslass (314) abgegeben werden, wobei zu diesem Zeitpunkt sandhaltiges Meerwasser durch den Meerwassereinlass (311) in die Rührkammer (312) eintritt.

2. Vorrichtung für das Offshore-Windenergiepfahlfundament nach Anspruch 1, ferner umfassend: eine Vielzahl von Sandpressteilen (40) und ein Hebeteil (50), wobei jedes der Vielzahl von Befestigungsteilen (10) mit einem der Vielzahl von Sandpressteilen (40) ummantelt ist, wobei das Hebeteil (50) unter dem Installationsteil (20) angeordnet ist, um die Vielzahl von Sandpressteilen (40) anzutreiben, um aufzusteigen und abzusteigen; wobei das Hebeteil (50) einen Hydraulikzylinder (51), eine Verbindungsplatte (52) und eine Vielzahl von Verbindungsstangen (53) umfasst, wobei eine Oberseite des Hydraulikzylinders (51) fest mit dem Installationsteil (20) verbunden ist, eine Unterseite des Hydraulikzylinders (51) fest mit der Verbindungsplatte (52) verbunden ist, und die Verbindungsplatte (52) durch die Vielzahl von Verbindungsstangen (53) fest mit der Vielzahl von Sandpressteilen (40) verbunden ist.

3. Vorrichtung für das Offshore-Windenergiepfahlfundament nach Anspruch 2, wobei das Sandsiebteil (30) ferner einen wasserdichten Motor (33) und einen Installationssitz (34) umfasst, wobei der Installationssitz (34) durch eine Vielzahl von Stützstangen (36) fest über dem Sandsiebring (31) angeordnet ist, wobei der Installationssitz (34) unter der Verbindungsplatte (52) angeordnet ist, und der wasserdichte Motor (33) fest auf dem Installationssitz (34) installiert ist.

4. Vorrichtung für das Offshore-Windenergiepfahlfundament nach Anspruch 3, wobei der Sandsiebring (31) fest mit der Vielzahl von Sandpressteilen (40) verbunden ist, und eine Unterseite des Sandsiebrings (31) mit jenen der Vielzahl von Sandpressteilen (40) bündig ist.

5. Vorrichtung für das Offshore-Windenergiepfahlfundament nach einem der Ansprüche 1 bis 4, wobei ein Spalt zwischen dem Laufrad (32) und dem Sandsiebring (31) gebildet ist, wobei ein Sandsperrnetz (35) in dem Spalt entlang einer axialen Richtung des Sandsiebrings (31) angeordnet ist, und das Sandsperrnetz (35) stromaufwärts des Meerwasserauslasses (314) angeordnet ist.

6. Vorrichtung für das Offshore-Windenergiepfahlfundament nach Anspruch 5, wobei der Meerwasserauslass (314) ein streifenförmiger Schlitz ist, der entlang einer Umfangsrichtung des Sandsiebrings (31) angeordnet ist.

7. Vorrichtung für das Offshore-Windenergiepfahlfundament nach Anspruch 1, wobei die Anzahl der Vielzahl von Befestigungsteilen (10) zwei oder drei beträgt, und jedes der Vielzahl von Befestigungsteilen (10) mit einer Basis (13) zum Anliegen an dem Meeresboden versehen ist.

8. Vorrichtung für das Offshore-Windenergiepfahlfundament nach Anspruch 7, wobei jedes der Vielzahl von Befestigungsteilen (10) eine Standsäule (11) und eine voreingebettete Säule (12) umfasst, die entlang ihrer gemeinsamen axialen Richtung angeordnet und miteinander verbunden sind, wobei eine Unterseite der voreingebetteten Säule (12) in den Meeresboden eingebettet ist, und eine Oberseite der Standsäule (11) fest mit dem Installationsteil (20) verbunden ist.

9. Vorrichtung für das Offshore-Windenergiepfahlfundament nach Anspruch 8, wobei das Installationsteil (20) eine Installationsbasis umfasst, und die Installationsbasis, die Standsäule (11) und die voreingebettete Säule (12) integral ausgebildet sind.

## Revendications

1. Dispositif pour fondation de pieux d'énergie éolienne en mer, comprenant :
une pluralité de parties de fixation (10) configurées pour être disposées de manière fixe sur le fond marin ;
une partie d'installation (20) disposée au-dessus de la pluralité de parties de fixation (10) et configurée pour installer un équipement d'énergie éolienne ; et
une partie de tamisage de sable (30),
**caractérisé en ce que** la partie de tamisage de sable (30) comprend une bague de tamisage de sable (31) et une roue (32), les deux étant disposées sous la partie d'installation (20), dans lequel une entrée d'eau de mer (311), une chambre d'agitation (312) et une sortie de sable (313) sont disposées sur la bague de tamisage de sable (31) en séquence d'un haut à un bas de la bague de tamisage de sable (31), et une sortie d'eau de mer (314) est disposée sur une surface latérale de la bague de tamisage de sable (31) pour communiquer avec la chambre d'agitation (312), dans lequel la roue (32) est disposée horizontalement et de manière rotative dans la chambre d'agitation (312) pour séparer le sable et l'eau de mer dans la chambre d'agitation (312) par une force centrifuge, dans lequel le sable et l'eau de mer sont déchargés par la sortie de sable (313) et la sortie d'eau de mer (314) respectivement, auquel moment l'eau de mer contenant du sable entre dans la chambre d'agitation (312) par l'entrée d'eau de mer (311).

2. Dispositif pour fondation de pieux d'énergie éolienne en mer selon la revendication 1, comprenant en outre : une pluralité de parties de pression de sable (40) et une partie de levage (50), dans lequel chacune de la pluralité de parties de fixation (10) est gainée avec l'une de la pluralité de parties de pression de sable (40), dans lequel la partie de levage (50) est disposée sous la partie d'installation (20) pour entraîner la pluralité de parties de pression de sable (40) à monter et descendre ; dans lequel la partie de levage (50) comprend un cylindre hydraulique (51), une plaque de connexion (52), et une pluralité de tiges de connexion (53), dans lequel un haut du cylindre hydraulique (51) est connecté de manière fixe à la partie d'installation (20), un bas du cylindre hydraulique (51) est connecté de manière fixe à la plaque de connexion (52), et la plaque de connexion (52) est connectée de manière fixe à la pluralité de parties de pression de sable (40) par l'intermédiaire de la pluralité de tiges de connexion (53).

3. Dispositif pour fondation de pieux d'énergie éolienne en mer selon la revendication 2, dans lequel la partie de tamisage de sable (30) comprend en outre un moteur étanche à l'eau (33) et un siège d'installation (34), dans lequel le siège d'installation (34) est disposé de manière fixe au-dessus de la bague de tamisage de sable (31) par l'intermédiaire d'une pluralité de tiges de support (36), dans lequel le siège d'installation (34) est disposé sous la plaque de connexion (52), et le moteur étanche à l'eau (33) est installé de manière fixe sur le siège d'installation (34).

4. Dispositif pour fondation de pieux d'énergie éolienne en mer selon la revendication 3, dans lequel la bague de tamisage de sable (31) est connectée de manière fixe à la pluralité de parties de pression de sable (40), et une surface inférieure de la bague de tamisage de sable (31) est de niveau avec celles de la pluralité de parties de pression de sable (40).

5. Dispositif pour fondation de pieux d'énergie éolienne en mer selon l'une quelconque des revendications 1 à 4, dans lequel un espace est formé entre la roue (32) et la bague de tamisage de sable (31), dans lequel un filet de blocage de sable (35) est disposé dans l'espace le long d'une direction axiale de la bague de tamisage de sable (31), et le filet de blocage de sable (35) est disposé en amont de la sortie d'eau de mer (314).

6. Dispositif pour fondation de pieux d'énergie éolienne en mer selon la revendication 5, dans lequel la sortie d'eau de mer (314) est une fente en forme de bande disposée le long d'une direction circonférentielle de la bague de tamisage de sable (31).

7. Dispositif pour fondation de pieux d'énergie éolienne en mer selon la revendication 1, dans lequel le nombre de la pluralité de parties de fixation (10) est de deux ou trois, et chacune de la pluralité de parties de fixation (10) est prévue avec une base (13) pour venir en butée contre le fond marin.

8. Dispositif pour fondation de pieux d'énergie éolienne en mer selon la revendication 7, dans lequel chacune de la pluralité de parties de fixation (10) comprend une colonne verticale (11) et une colonne pré-encastrée (12), qui sont disposées et connectées l'une à l'autre le long de leur direction axiale commune, dans lequel un bas de la colonne pré-encastrée (12) est encastré dans le fond marin, et un haut de la colonne verticale (11) est connecté de manière fixe à la partie d'installation (20).

9. Dispositif pour fondation de pieux d'énergie éolienne en mer selon la revendication 8, dans lequel la partie d'installation (20) comprend une base d'installation, et la base d'installation, la colonne verticale (11) et la colonne pré-encastrée (12) sont formées d'un seul tenant.
